Europäisches Patentamt

European Patent Office

Office européen des brevets

(11) Veröffentlichungsnummer: **0 475 474 A1**

# EUROPÄISCHE PATENTANMELDUNG

(21) Anmeldenummer: **91202020.3**

(22) Anmeldetag: **06.08.91**

(51) Int. Cl.5: **G02B 6/255**, G02B 6/38

(30) Priorität: **10.08.90 DE 4025351**

(43) Veröffentlichungstag der Anmeldung:
**18.03.92 Patentblatt 92/12**

(84) Benannte Vertragsstaaten:
**DE ES FR GB IT**

(71) Anmelder: **Philips Patentverwaltung GmbH
Wendenstrasse 35 Postfach 10 51 49
W-2000 Hamburg 1(DE)**

(84) **DE**

(71) Anmelder: **N.V. Philips' Gloeilampenfabrieken
Groenewoudseweg 1**

NL-5621 BA Eindhoven(NL)

(84) **ES FR GB IT**

(72) Erfinder: **Zell, Werner, Dr.
Am Ufer 260
W-5060 Bergisch-Gladbach 1(DE)**
Erfinder: **Boehm, Detlef
Baumweg 16
W-5206 Neunkirchen-Seelscheid 1(DE)**

(74) Vertreter: **Koch, Ingo, Dr.-Ing. et al
Philips Patentverwaltung GmbH
Wendenstrasse 35 Postfach 10 51 49
W-2000 Hamburg 1(DE)**

(54) Einrichtung zum Verschweissen zweier Gruppen von Lichtwellenleitern.

(57) Die Erfindung bezieht sich auf eine Einrichtung zum Verschweißen der Enden einer ersten Gruppe (20) von in einer Fläche nebeneinander ausgerichteten Lichtwellenleitern (3) (LWL) mit den Enden einer zweiten gleichartigen Gruppe (21) von LWL (3) mittels eines im wesentlichen in Richtung der Verbindungsstellen (30) verlaufenden Lichtbogens, bestehend aus einer Schweißelektroden (22,23) enthaltenden Schweißvorrichtung sowie aus zwei auf die Schweißvorrichtung lagefixiert aufsetzbaren, jeweils eine Gruppe (20 bzw. 21) von LWL (3) aufnehmenden Halteklammern (2,24,25,43,44) und gegebenenfalls aus einer Sortiervorrichtung (7) zum Einbringen der LWL (3) einer Gruppe (20 bzw. 21) in vorbestimmter Lage in die zugeordnete Halteklammer, welche Formschlußelemente (14) aufweist, die mit zugeordneten Formschlußelementen (Steg 13 bzw. Stifte 41,42) der Sortiervorrichtung (7) und der Schweißeinrichtung zur Festlegung der gegenseitigen Relativlage zusammenwirken. Die gleichmäßige Qualität aller Schweißstellen wird bei verschiedenen Anzahlen von LWL dadurch verbessert, daß an der Schweißvorrichtung oder der Sortiervorrichtung (7) oder an den Halteklammern (2,24,25,43,44) Verstelleinrichtungen (13,18 bzw. 39,40) vorgesehen sind, welche bei verschiedenen Anzahlen von LWL (3) pro Gruppe (20,21) jeweils eine solche Lage der Gruppe (20,21) auf dem Schweißgerät vorgeben, daß die Mittelachse jeder Gruppe (20,21) etwa die Mitte der Lichtbogenlänge schneidet.

FIG.3

EP 0 475 474 A1

Die Erfindung bezieht sich auf eine Einrichtung zum verschweißen der Enden einer ersten Gruppe von in einer Fläche nebeneinander ausgerichteten Lichtwellenleitern (LWL) mit den Enden einer zweiten gleichartigen Gruppe von LWL mittels eines im wesentlichen in Richtung der Verbindungsstellen verlaufenden Lichtbogens, bestehend aus einer Schweißelektroden enthaltenden Schweißvorrichtung sowie aus zwei auf die Schweißvorrichtung lagefixiert aufsetzbaren, jeweils eine Gruppe von LWL aufnehmenden Halteklammern und gegebenenfalls aus einer Sortiervorrichtung zum Einbringen der LWL einer Gruppe in vorbestimmter Lage in die zugeordnete Halteklammer, welche Formschlußelemente aufweist, die mit zugeordneten Formschlußelementen der Sortiervorrichtung und der Schweißeinrichtung zur Festlegung der gegenseitigen Relativlage zusammenwirken.

Eine derartige Einrichtung ist in SPIE VOL 468, Fibre Optics 1984, Seiten 19 bis 26 beschrieben. Auch durch die EP-A 0 340 867 ist eine vergleichbare Einrichtung bekannt, allerdings nicht in Anwendung für ein bestimmtes Schweißverfahren.

Die bekannten Einrichtungen sind für eine festvorgegebene Anzahl von LWL pro Gruppe geeignet.

Der Erfindung liegt die Aufgabe zugrunde, eine Einrichtung der eingangs genannten Art derart zu gestalten, daß auch bei verschiedenen Anzahlen von LWL pro Gruppe die gleichmäßig gute Qualität aller Schweißstellen gewährleistet ist.

Die Lösung gelingt dadurch, daß an der Schweißvorrichtung oder der Sortiervorrichtung oder an den Halteklammern Verstelleinrichtungen vorgesehen sind, welche bei verschiedenen Anzahlen von LWL pro Gruppe jeweils eine solche Lage der Gruppe auf dem Schweißgerät vorgeben, daß die Mittelachse jeder Gruppe etwa die Mitte der Lichtbogenlänge schneidet.

Es hat sich gezeigt, daß die Elektroden für die Lichtbogen symmetrisch zu den Gruppen der Lichtwellenleiter angeordnet werden müssen, wenn eine gleichmäßige Qualität aller gleichzeitig erstellten Schweißstellen erreicht werden soll. Bei den bekannten Einrichtungen werden die LWL einer Gruppe in Halteklammern eingelegt, wobei die Lage der Gruppe relativ zur Bezugslage eines Rand-LWL vorgegeben ist. Bei einer abweichenden Anzahl von LWL ist dann die Position des Rand-LWL auf der Schweißvorrichtung vorbestimmt, nicht aber die Lage der Mittelachse der Gruppen der LWL.

Durch die erfindungsgemäße Lösung wird sichergestellt, daß die Mittelachse der Gruppen der LWL auch bei verschiedenen Anzahlen von LWL in gleichbleibender Mittel-Position auf der Schweißvorrichtung liegt.

Falls eine Sortiervorrichtung beispielsweise der durch die EP-A 0 340 867 bekannten Art vorgesehen ist, können die Formschlußelemente der Sortiervorrichtung verstellbar sein. Dann werden die LWL der Gruppen in den Halteklammern in genau der Lage festgeklemmt, daß die Mittelachsen der Gruppen nach dem Auflegen der Halteklammern auf eine Schweißvorrichtung auf die Mitte der Länge des Lichtbogens gerichtet sind.

Die gleiche Wirkung läßt sich auch dadurch erzielen, daß die Tiefe von die LWL einer Gruppe aufnehmenden Einfädelungskanälen der Sortiereinrichtung verstellbar ist.

Eine weitere Möglichkeit besteht darin, daß die Formschlußelemente der Halteklammern verstellbar sind.

Diese Lösung ist insbesondere dann geeignet, wenn die LWL einer Gruppe von Hand ohne Verwendung einer Sortiervorrichtung bis an den Boden eines Einfädelungskanals einer Halteklammer einsortiert werden.

Vor dem Schweißvorgang sind im allgemeinen vorbereitende Arbeitsgänge erforderlich, insbesondere zur Endflächenpräparation der LWL. Dabei werden die LWL mittels der Halteklammern auch auf entsprechende Vorrichtungen festgelegt.

Es kann vorteilhaft sein, daß dabei die Lageausrichtung der LWL-Gruppen zu diesen Vorrichtungen relativ zu einem Rand-LWL erfolgt. Insbesondere in solchen Fällen ist eine erfindungsgemäße Lösung vorteilhaft, bei welcher die Formschlußelemente der Schweißvorrichtung verstellbar sind.

Eine einfach zu handhabende Ausführung ist dadurch gekennzeichnet, daß die für zwei Halteklammern vorgesehenen Formschlußelemente der Schweißvorrichtung gekoppelt verstellbar sind.

Die Bedienung einer erfindungsgemäßen Vorrichtung wird dadurch erleichtert, daß Verstelleinrichtungen vorgesehen sind, welche in der Anzahl der LWL einer Gruppe zugeordneten Positionen arretierbar sind. Beispielsweise kann an einem die Verstellung bewirkenden Drehknopf eine Nase angeordnet werden, welche in Gegenüberstellung zu entsprechend der Anzahl der LWL gekennzeichneten Merkzeichen gebracht wird. In diesen Stellungen kann der Drehknopf vorzugsweise einrasten.

Die Erfindung wird anhand der Zeichnung näher erläutert.

Fig. 1     zeigt eine Ausführungsform einer Halteklammer mit klemmend gehaltenen LWL,

Fig. 2     zeigt die Halteklammer nach Fig. 1 vor dem Einsetzen in eine Sortiervorrichtung,

Fig. 3     zeigt perspektivisch das Grundprinzip einer Schweißvorrichtung mit aufgesetzten Halteklammern,

Fig. 4     zeigt schematisch die Aufsicht auf eine Schweißvorrichtung mit verstellbaren Formschlußelementen,

Fig. 5    zeigt einen Schnitt A/A nach Fig. 4.

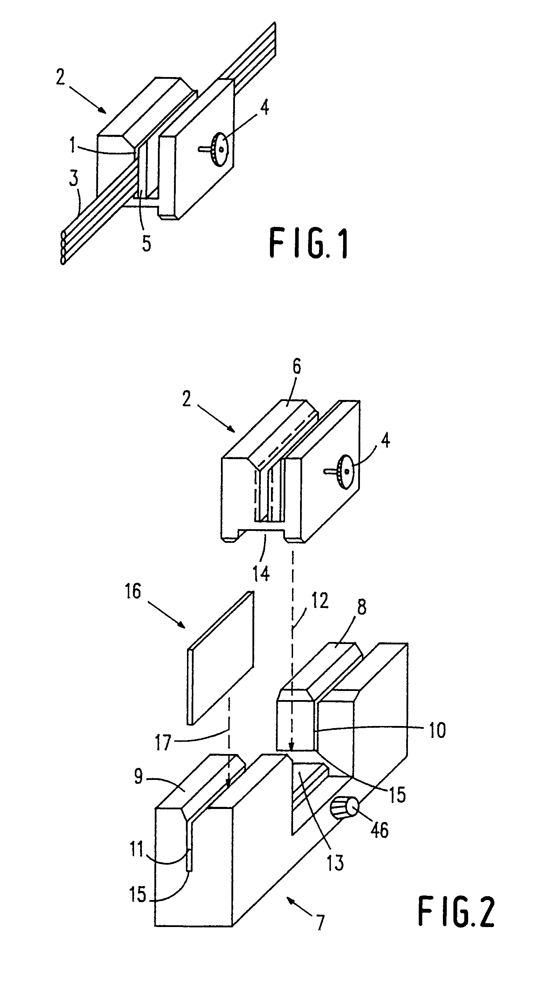

Im Aufnahmekanal 1 der Fig. 1 perspektivisch dargestellten Halteklammer 2 sind vier LWL 3 parallel nebeneinander eingeklemmt. Mittels der Stellschraube 4 ist die Klemmbacke 5 an die LWL 3 gedrückt, welche damit diese zwischen den weichelastisch beschichteten Wandungen der Klemmbacke 5 und deren Gegenanlage 6 der Klemmzwinge 2 durch elastische Klemmkraft unverrückbar gehalten sind.

Anhand der Figur 2 wird erläutert, wie die LWL 3 in den Aufnahmekanal 1 eingelegt werden.

Die Sortiervorrichtung 7 weist zwei Sortiergabeln 8 und 9 auf, welche zueinander fluchtende Einfädelungskanäle 10 bzw. 11 eingebracht sind. In den Freiraum zwischen den Sortiergabeln paßt die Halteklammer 2, welche in Richtung des Pfeils 12 eingesetzt wird. Der Steg 13 greift dabei formschlüssig in die Nut 14 der Halteklammer 2 ein, welche dadurch auch gegen seitliches Verschieben gesichert ist. Die Wandung der Gegenanlage 6 der Halteklammer 2 fluchtet dann zu den entsprechenden Flächen der Einfädelungskanäle 10 und 11. Dann werden die LWL 3 durchgehend in die Einfädelungskanäle 10 und 11 eingelegt und mittels der Schiebefolie in Pfeilrichtung 12 an die Bodenflächen 14 bzw. 15 gedrückt. Danach erstrecken sich die LWL im Bereich des geöffneten Aufnahmekanals 1 der Halteklammer 2 parallel und aneinander anliegend. Nach dem Festklemmen der LWL 3 durch Betätigung der Stellschraube 4 wird die Halteklammer 2 mitsamt der gehaltenen LWL 3 entgegen der Richtung des Pfeils 12 aus der Sortiervorrichtung 7 entnommen.

Der als Formschlußelement wirkende Steg 13 der Sortiervorrichtung 7 ist mittels der Stellschraube 46 höhenverstellbar.

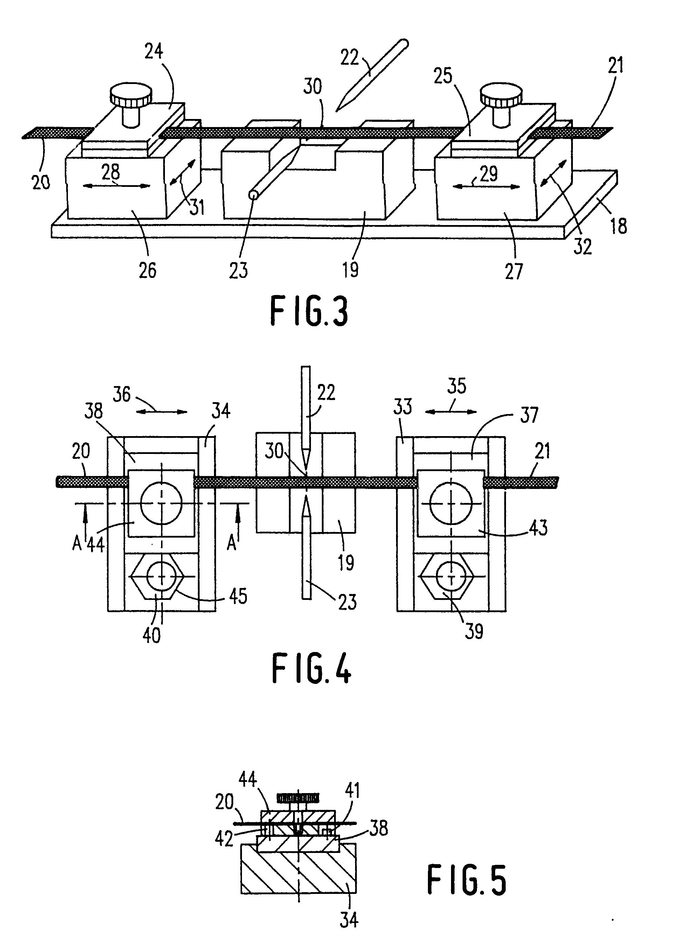

Gemäß Fig. 3 ist auf einer Grundplatte 18 eine Schweißvorrichtung fest angeordnet, welche aus einem Auflageblock 19 für Gruppen 20 und 21 von LWL sowie zwei Schweißelektroden 22 und 23 besteht. Die einzelnen sich paarweise koaxial gegenüberliegenden LWL der Gruppen 20 und 21 werden optimal gleichmäßig verschweißt, wenn die Schweißelektroden 22 und 23 symmetrisch zur Mittelachse der Gruppen 20 und 21 angeordnet sind, wenn sie also den gleichen Abstand zum jeweils nächstliegenden LWL haben.

Halteklammern 24 und 25 für die Gruppen 20 bzw. 21 sind formschlüssig auf Halteblöcke 26 bzw. 27 aufgelegt, welche in Richtungen der Pfeile 28 bzw. 29 verschiebbar auf der Grundplatte geführt sind, damit die Enden der LWL der Gruppen 20 und 21 in der Verbindungslinie 30 aneinander führbar sind.

Erfindungsgemäß müssen die Haltblöcke 26 und 27 auch in Richtung der Pfeile 31 bzw. 32 verstellbar sein, damit die Mittelachsen der Gruppen 20 und 21 auf die Mitte des zwischen den Schweißelektroden 22 und 23 zu zündenden Lichtbogens gerichtet werden können.

Ein Ausführungsbeispiel für eine solche Verstellmöglichkeit ist in den Figuren 4 und 5 angedeutet. Die Halteblöcke 33 und 34 sind auf einer nicht dargestellten Grundplatte (entsprechend Position 18 in Fig. 3) in Richtung der Pfeile 35 bzw. 36 beweglich. Senkrecht dazu in Richtung der Schweißelektroden 22 und 23 sind Führungshalterungen 37 bzw. 38 in Gleitführungen der Halteblökke 33 bzw. 34 gegen verstellbare Anschläge 39 bzw. 40 drückbar. Die Halteblöcke weisen Formschlußstifte 41 und 42 auf, welche in zugeordnete Formschlußausnehmungen der Halteklammern 43 bzw. 44 eingreifen. Die Lage der Formschlußstifte 41 und 42 ist durch Drehung der verstellbaren Anschläge 39 bzw. 40 gegenüber den Schweißelektroden 22 und 23 änderbar, da die sechs Anschlagflächen 45 verschiedene Abstände von den Drehachsen der verstellbaren Anschlägen 39 bzw. 40 haben.

## Patentansprüche

1. Einrichtung zum Verschweißen der Enden einer ersten Gruppe (20) von in einer Fläche nebeneinander ausgerichteten Lichtwellenleitern (3) (LWL) mit den Enden einer zweiten gleichartigen Gruppe (21) von LWL (3) mittels eines im wesentlichen in Richtung der Verbindungsstellen (30) verlaufenden Lichtbogens, bestehend aus einer Schweißelektroden (22,23) enthaltenden Schweißvorrichtung (Fig. 3) sowie aus zwei auf die Schweißvorrichtung lagefixiert aufsetzbaren, jeweils eine Gruppe (20 bzw. 21) von LWL (3) aufnehmenden Halteklammern (2,24,25,43,44) und gegebenenfalls aus einer Sortiervorrichtung (7) zum Einbringen der LWL (3) einer Gruppe (20 bzw. 21) in vorbestimmter Lage in die zugeordnete Halteklammer, welche Formschlußelemente (14) aufweist, die mit zugeordneten Formschlußelementen (Steg 13 bzw. Stifte 41,42) der Sortiervorrichtung (7) und der Schweißeinrichtung (Fig. 3) zur Festlegung der gegenseitigen Relativlage zusammenwirken, dadurch gekennzeichnet, daß an der Schweißvorrichtung (Fig. 3) oder der Sortiervorrichtung (7) oder an den Halteklammern (2,24,25,43,44) Verstelleinrichtungen (13,18 bzw. 39,40) vorgesehen sind, welche bei verschiedenen Anzahlen von LWL (3) pro Gruppe (20,21) jeweils eine solche Lage der Gruppe (20,21) auf dem Schweißgerät (Fig. 3, Fig. 4) vorgeben, daß die Mittelachse jeder Gruppe (20,21) etwa die Mitte der Lichtbogenlänge schneidet.

**2.** Einrichtung nach Anspruch 1, dadurch gekennzeichnet, daß die Formschlußelemente (13) der Sortiervorrichtung verstellbar sind.

**3.** Einrichtung nach Anspruch 1, dadurch gekennzeichnet, daß die Tiefe von die LWL einer Gruppe aufnehmenden Einfädelungskanälen (11) der Sortiervorrichtung (7) verstellbar ist.

**4.** Einrichtung nach Anspruch 1, dadurch gekennzeichnet, daß die Formschlußelemente (14) der Halteklammern (2) verstellbar sind.

**5.** Einrichtung nach Anspruch 1, dadurch gekennzeichnet, daß die Formschlußelemente (41,42) der Schweißvorrichtung (Figuren 4,5) verstellbar sind.

**6.** Einrichtung nach Anspruch 5, dadurch gekennzeichnet, daß die für zwei Halteklammern (43 und 44) vorgesehenen Formschlußelemente (41,42) der Schweißvorrichtung (Figuren 4,5) gekoppelt verstellbar sind.

**7.** Einrichtung nach einem der Ansprüche 1 bis 6, dadurch gekennzeichnet, daß Verstelleinrichtungen (18,39,40) vorgesehen sind, welche in der Anzahl der LWL (3) einer Gruppe (20,21) zugeordneten Positionen arretierbar sind.

FIG.1

FIG.2

FIG.3

FIG.4

FIG.5

# EUROPÄISCHER RECHERCHENBERICHT

Nummer der Anmeldung

## EP 91 20 2020

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 069 832  (LICENTIA) <br> * Zusammenfassung; Seite 3, letzter Absatz; Ansprüche 1,5,6; Abbildung 1 * <br> – – – | 1 | G 02 B 6/255 <br> G 02 B 6/38 |
| Y | EP-A-0 211 221  (SUMITOMO) <br> * Zusammenfassung; Seite 10, Zeile 19 - Seite 11, Zeile 14; Abbildungen 7A-C * <br> – – – | 1 | |
| D,A | EP-A-0 340 867  (PHILIPS PATENTVERWALTUNG) <br> * Zusammenfassung; Abbildungen 1-4; Ansprüche 1-4 * <br> – – – | 1 | |
| A | I.E.E.E. JOURNAL ON SELECTED AREAS IN COMMUNI-CATIONS Band SAC-4, Nr. 5, August 1986, Seiten 706-713, New York, NY, US; K. INADA et al.: "Splicing of Fibers by the Fusion Method" <br> * Seite 710, Absatz: "IV. Tape Fiber Splicing"; Abbildung 17 * <br> – – – | 1 | |
| A | JOURNAL OF LIGHTWAVE TECHNOLOGY Band LT-2, Nr. 1, 1984, Seiten 25-31, New York, US; M. TACHIKURA et al.: "Fusion mass-splices for optical fibers using high-frequency discharge" <br> * Seite 25, Absatz: "IIA. Discharge heating condition"; Abbildungen 2,4 * <br> – – – – – | 1 | RECHERCHIERTE SACHGEBIETE (Int. Cl.5) <br><br> G 02 B |

Der vorliegende Recherchenbericht wurde für alle Patentansprüche erstellt

| Recherchenort | Abschlußdatum der Recherche | Prüfer |
|---|---|---|
| Berlin | 07 November 91 | HYLLA W R |